# EUROPEAN PATENT APPLICATION

(11) **EP 4 782 799 A1**
(43) Date of publication of application: **29.07.2026**
(21) Application number: 24898287.8
(22) Date of filing: 13.11.2024
(51) Int. Cl.: G01J 1/42, G01J 1/02, H04N 23/73, H04N 23/63, G01J 1/44

(54) **METHOD FOR DETERMINING FREQUENCY OF LIGHT SOURCE, AND ELECTRONIC DEVICE THEREFOR**

(30) Priority: 27.11.2023 KR 20230166643; 17.01.2024 KR 20240007562
(71) Applicant: Samsung Electronics Co., Ltd., Suwon-si, Gyeonggi-do 16677 (KR)
(72) Inventor: HONG, Hyeonseok, Suwon-si Gyeonggi-do 16677 (KR); PARK, Dongyoul, Suwon-si Gyeonggi-do 16677 (KR); LEE, Junghwan, Suwon-si Gyeonggi-do 16677 (KR); JANG, Taesoo, Suwon-si Gyeonggi-do 16677 (KR)
(74) Representative: HGF
(86) International application number: PCT/KR2024/096461
(87) International publication number: WO 2025/116695

(57) **Abstract**

An electronic device according to an embodiment of the disclosure may include a camera, a sensor, a processor, and a memory for storing instructions. The instructions may, when executed by the processor, cause the electronic device to, if a camera application is executed, acquire a first data frame by sampling brightness data acquired by the sensor based on a first sampling rate, identify a first frequency based on the first data frame, acquire a second data frame subsequent to the first data frame by sampling the brightness data acquired by the sensor based on a second sampling rate different from the first sampling rate while the camera application is executed, identify a second frequency based on the second data frame, and determine a frequency of the light source based on the first frequency and the second frequency. Other various embodiments obtained through this document are possible.

## Description

### [Technical Field]

The disclosure relates to a method for determining a frequency of a light source, and an electronic device therefor.

### [Background Art]

As carrying a portable electronic device becomes common in daily life, using a camera function of the portable electronic device is greatly increased, and photographing using the portable electronic device is recognized as an indispensable function such that the camera function becomes a criterion for selecting a portable electronic device. In recent, there are increasing requirements for meeting user satisfaction with an image captured by a camera of the portable electronic device. For example, if capturing a subject under an indoor lighting environment powered by alternating current power such as an incandescent light bulb or fluorescent light, a flicker phenomenon in which a repetitive dark stripe pattern is formed on the image may occur due to a difference of a frequency of the light and a frequency of an exposure time of the camera. To prevent this flicker phenomenon, the electronic device may detect the frequency of the light and change the exposure control of the camera in response to the detected frequency of the light.

The foregoing information may be provided as related art for the purpose of aiding understanding of the disclosure. No claim or determination is made as to whether any of the foregoing may be applied as the prior art in connection with the disclosure.

### [Disclosure of Invention]

### [Solution to Problem]

An electronic device according to an embodiment of the disclosure may include a camera, a sensor, a processor, and a memory for storing instructions. The instructions may, when executed by the processor, cause the electronic device to, if a camera application is executed, acquire a first data frame by sampling brightness data acquired by the sensor based on a first sampling rate. The instructions may, when executed by the processor, cause the electronic device to identify a first frequency based on the first data frame. The instructions may, when executed by the processor, cause the electronic device to acquire a second data frame subsequent to the first data frame by sampling the brightness data acquired by the sensor based on a second sampling rate different from the first sampling rate while the camera application is executed. The instructions may, when executed by the processor, cause the electronic device to identify a second frequency based on the second data frame. The instructions may, when executed by the processor, cause the electronic device to determine a frequency of the light source based on the first frequency and the second frequency.

A method according to an embodiment of the disclosure may include, if a camera application is executed, acquiring a first data frame by sampling brightness data obtained from a sensor based on a first sampling rate. The method may include identifying a first frequency based on the first data frame. The method may include acquiring a second data frame subsequent to the first data frame by sampling the brightness data acquired by the sensor based on a second sampling rate different from the first sampling rate while the camera application is executed. The method may include identifying a second frequency based on the second data frame. The method may include determining a frequency of the light source based on the first frequency and the second frequency.

A computer-readable recording medium according to an embodiment of the disclosure may include programs executable on a computer. The programs may perform, if a camera application is executed, acquiring a first data frame by sampling brightness data acquired by the sensor based on a first sampling rate. The programs may perform identifying a first frequency based on the first data frame. The programs may perform acquiring a second data frame subsequent to the first data frame by sampling the brightness data acquired by the sensor based on a second sampling rate different from the first sampling rate while the camera application is executed. The programs may perform identifying a second frequency based on the second data frame. The programs may perform determining a frequency of the light source based on the first frequency and the second frequency.

### [Brief Description of Drawings]

FIG. 1 is a block diagram of an electronic device within a network environment according to an embodiment.
FIG. 2 is a block diagram illustrating a camera module, according to various embodiments.
FIG. 3A and FIG. 3B are diagrams describing a case where frequency folding does not occur and a case where frequency folding occurs in sampling brightness data to detect a frequency of a light source, according to an embodiment.
FIG. 4 is a diagram describing a configuration of an electronic device, according to an embodiment.
FIG. 5 is a diagram describing how to determine a frequency of a light source using a plurality of sampling rates, according to an embodiment.
FIG. 6A and FIG. 6B are diagrams describing how to calculate expected frequencies for a light source, according to an embodiment.
FIG. 7 is a diagram describing how to measure a frequency of a light source using a plurality of sampling rates while a camera application is executed on an electronic device, according to an embodiment.
FIG. 8 is a flowchart illustrating an operation method of an electronic device, according to an embodiment.
FIG. 9 is a flowchart illustrating a method for determining a frequency of a light source using a plurality of sampling rates while a camera application is executed on an electronic device, according to an embodiment.

In relation to descriptions of the drawings, like or similar reference numerals may be used for like or similar components.

### [Mode for the Invention]

Hereinafter, various embodiments disclosed in this document will be described with reference to the attached drawings. It should be understood that it is not intended to limit various embodiments of the disclosure to specific forms, but includes various modifications, equivalents, and/or alternatives of the disclosure.

If capturing an image using an image sensor in an electronic device, there may occur a flicker phenomenon where a repetitive dark stripe pattern is formed on the image according to a frequency of an external light source and an exposure time of the image sensor. To mitigate the flickering, the electronic device may detect an actual frequency of the light source using a flicker sensor. For example, the flicker sensor may apply a window filter to raw data measured based on a designated sampling rate and then identify frequency component data through a Fourier transform operation, wherein a maximum detectable effective frequency may be a Nyquist frequency which is 1/2 of the designated sampling rate. That is, electronic device may have difficulty in detecting the frequency of the external light source having a frequency higher than the Nyquist frequency.

A method of increasing the sampling rate may be considered to detect a frequency above the Nyquist frequency, but there may be a physical limitation in raising the sampling rate as light sources with the frequency exceeding 1000 Hz gradually increase. In addition, increasing the sampling rate requires a proportional increase in data volume to maintain a frequency resolution, which may degrade processing performance (e.g., computation time, memory load, etc.) of the electronic device.

Various embodiments of this document may provide various embodiments for detecting the frequency of the light source having a frequency over the maximum effective frequency (e.g., the Nyquist frequency) detectable at the sampling rate without increasing the sampling rate, by measuring the frequency of an external light source based on data acquired using a plurality of different sampling rates in image capturing.

Technical tasks to be achieved in this document are not limited to the technical tasks mentioned above, and other technical tasks not mentioned will be clearly understood by those having ordinary knowledge in the technical field to which this document belongs.

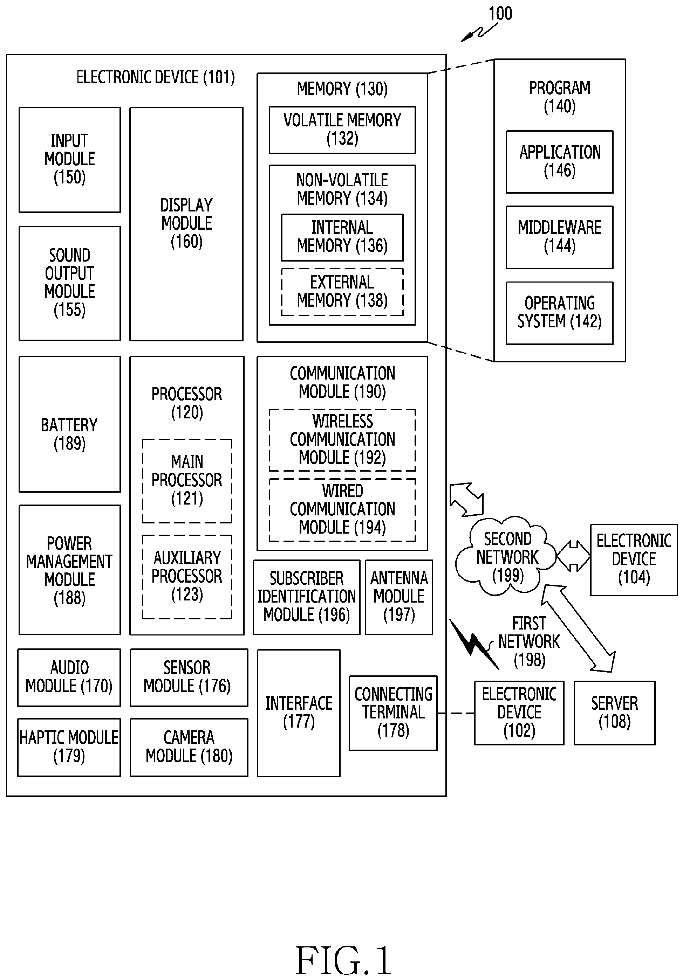

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

The connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

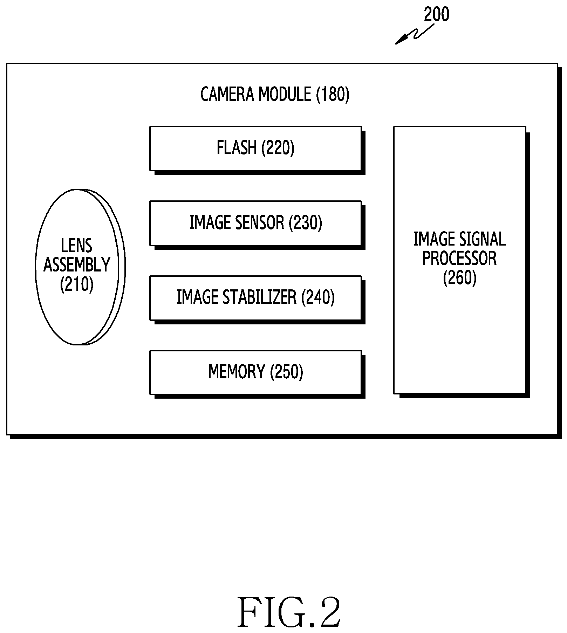

FIG. 2 is a block diagram 200 illustrating the camera module 180 according to various embodiments.

Referring to FIG. 2, the camera module 180 may include a lens assembly 210, a flash 220, an image sensor 230, an image stabilizer 240, memory 250 (e.g., buffer memory), or an image signal processor 260. The lens assembly 210 may collect light emitted or reflected from an object whose image is to be taken. The lens assembly 210 may include one or more lenses. According to an embodiment, the camera module 180 may include a plurality of lens assemblies 210. In such a case, the camera module 180 may form, for example, a dual camera, a 360-degree camera, or a spherical camera. Some of the plurality of lens assemblies 210 may have the same lens attribute (e.g., view angle, focal length, auto-focusing, f number, or optical zoom), or at least one lens assembly may have one or more lens attributes different from those of another lens assembly. The lens assembly 210 may include, for example, a wide-angle lens or a telephoto lens.

The flash 220 may emit light that is used to reinforce light reflected from an object. According to an embodiment, the flash 220 may include one or more light emitting diodes (LEDs) (e.g., a red-green-blue (RGB) LED, a white LED, an infrared (IR) LED, or an ultraviolet (UV) LED) or a xenon lamp. The image sensor 230 may obtain an image corresponding to an object by converting light emitted or reflected from the object and transmitted via the lens assembly 210 into an electrical signal. According to an embodiment, the image sensor 230 may include one selected from image sensors having different attributes, such as a RGB sensor, a black-and-white (BW) sensor, an IR sensor, or a UV sensor, a plurality of image sensors having the same attribute, or a plurality of image sensors having different attributes. Each image sensor included in the image sensor 230 may be implemented using, for example, a charged coupled device (CCD) sensor or a complementary metal oxide semiconductor (CMOS) sensor.

The image stabilizer 240 may move the image sensor 230 or at least one lens included in the lens assembly 210 in a particular direction, or control an operational attribute (e.g., adjust the read-out timing) of the image sensor 230 in response to the movement of the camera module 180 or the electronic device 101 including the camera module 180. This allows compensating for at least part of a negative effect (e.g., image blurring) by the movement on an image being captured. According to an embodiment, the image stabilizer 240 may sense such a movement by the camera module 180 or the electronic device 101 using a gyro sensor (not shown) or an acceleration sensor (not shown) disposed inside or outside the camera module 180. According to an embodiment, the image stabilizer 240 may be implemented, for example, as an optical image stabilizer. The memory 250 may store, at least temporarily, at least part of an image obtained via the image sensor 230 for a subsequent image processing task. For example, if image capturing is delayed due to shutter lag or multiple images are quickly captured, a raw image obtained (e.g., a Bayer-patterned image, a high-resolution image) may be stored in the memory 250, and its corresponding copy image (e.g., a low-resolution image) may be previewed via the display module 160. Thereafter, if a specified condition is met (e.g., by a user's input or system command), at least part of the raw image stored in the memory 250 may be obtained and processed, for example, by the image signal processor 260. According to an embodiment, the memory 250 may be configured as at least part of the memory 130 or as a separate memory that is operated independently from the memory 130.

The image signal processor 260 may perform one or more image processing with respect to an image obtained via the image sensor 230 or an image stored in the memory 250. The one or more image processing may include, for example, depth map generation, three-dimensional (3D) modeling, panorama generation, feature point extraction, image synthesizing, or image compensation (e.g., noise reduction, resolution adjustment, brightness adjustment, blurring, sharpening, or softening). Additionally or alternatively, the image signal processor 260 may perform control (e.g., exposure time control or read-out timing control) with respect to at least one (e.g., the image sensor 230) of the components included in the camera module 180. An image processed by the image signal processor 260 may be stored back in the memory 250 for further processing, or may be provided to an external component (e.g., the memory 130, the display module 160, the electronic device 102, the electronic device 104, or the server 108) outside the camera module 180. According to an embodiment, the image signal processor 260 may be configured as at least part of the processor 120, or as a separate processor that is operated independently from the processor 120. If the image signal processor 260 is configured as a separate processor from the processor 120, at least one image processed by the image signal processor 260 may be displayed, by the processor 120, via the display module 160 as it is or after being further processed.

According to an embodiment, the electronic device 101 may include a plurality of camera modules 180 having different attributes or functions. In such a case, at least one of the plurality of camera modules 180 may form, for example, a wide-angle camera and at least another of the plurality of camera modules 180 may form a telephoto camera. Similarly, at least one of the plurality of camera modules 180 may form, for example, a front camera and at least another of the plurality of camera modules 180 may form a rear camera.

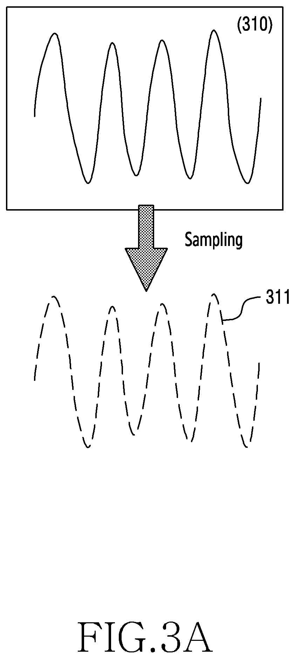

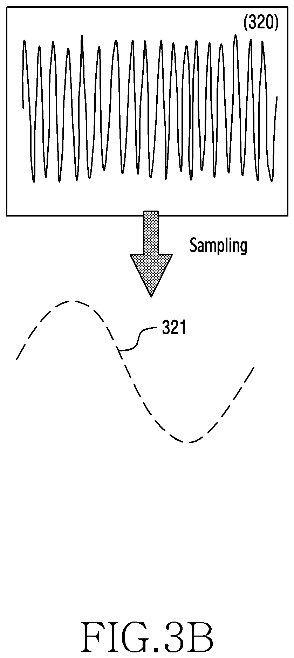

FIG. 3A and FIG. 3B are diagrams describing a case where frequency folding does not occur and a case where frequency folding occurs in sampling brightness data to detect a frequency of a light source, according to an embodiment. According to various embodiments, an electronic device (e.g., the electronic device 101 of FIG. 1) may obtain brightness data from a sensor (e.g., the sensor module 176 of FIG. 1) while a camera application is executed under an indoor lighting environment, and detect the frequency of the light source by sampling the obtained brightness data at a designated sampling rate. If the electronic device 101 samples the brightness data at the designated sampling rate, the maximum effective frequency detectable may correspond to 1/2 of the sampling rate, i.e., the Nyquist frequency. For example, if the sampling rate of 2048 Hz is applied, the electronic device 101 may detect a light source frequency up to 1024 Hz.

For example, as shown in FIG. 3A, if a light source frequency 310 to be detected by the electronic device 101 is below the Nyquist frequency of the designated sampling rate, the light source frequency 310 falls within a range of the maximum effective frequency detectable at the designated sampling rate and accordingly the electronic device 101 may accurately measure a frequency 311 corresponding to the light source.

For another example, as shown in FIG. 3B, if a light source frequency 320 to be detected by the electronic device 101 is greater than the Nyquist frequency of the designated sampling rate, a high frequency component of the light source may be distorted and presented at a lower frequency without being properly sampled due to the frequency folding where frequencies above the Nyquist frequency are symmetrically shifted downward based on the Nyquist frequency. As a result, the electronic device 101 may mis-detect a frequency 321 lower than the actual frequency of the light source. Hence, a method for more accurately detecting a light source frequency above the Nyquist frequency may be required if the range of an applicable sampling rate for the electronic device 101 is limited.

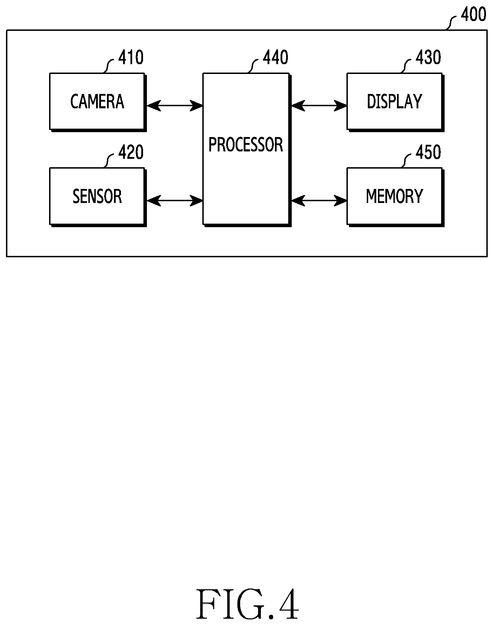

FIG. 4 is a diagram illustrating a configuration of an electronic device 400, according to an embodiment.

Referring to FIG. 4, the electronic device 400 is a device for detecting the frequency of a light source having a frequency above the Nyquist frequency using a plurality of different sampling rates in image capturing, and may include a camera 410, a sensor 420, a display 430, a processor 440, or a memory 450. In FIG. 4, the electronic device 400 may correspond to the electronic device 101 shown in FIG. 1.

In an embodiment, the camera 410 (e.g., the camera module 180 of FIG. 1) may capture a subject in response to a user manipulation. For example, if a camera application is executed, the camera 410 may acquire preview images including the subject on a frame basis, and if receiving a user input (e.g., a capture command or a shutter button input) for image capturing while displaying the preview image, may capture an image including the subject. According to various embodiments, the camera 410 may set a shooting parameter (e.g., an exposure time or a shutter speed) by considering the frequency of an external light source and capture an image (or a video) based on the set shooting parameter, to prevent occurrence of the flickering where a repetitive dark stripe pattern is formed on the image.

In an embodiment, the sensor 420 (e.g., the sensor module 176 of FIG. 1) may detect brightness data for the external light source while the camera application is executed to provide the preview image.

In an embodiment, the display 430 (e.g., the display module 160 of FIG. 1) may display an image acquired using the camera 410. For example, if the camera application is executed, the display 430 may display the preview image obtained from the camera 410. As another example, the display 430 may display the captured image in response to a capture command inputted while providing the preview image.

In an embodiment, the display 430 may include at least one or more of a liquid crystal display (LCD), a thin film transistor (TFT)-LCD, an organic light emitting diode (OLED), a light emitting diode (LED), an active matrix organic LED (AMOLED), a flexible display and a three-dimensional (3D) display. In addition, some of these displays may be configured as a transparent or light-transmissive type to view outside therethrough. This may be configured as a transparent display form including a transparent OLED (TOLED).

In an embodiment, the memory 450 (e.g., the memory 130 of FIG. 1) may store instructions, when executed by the processor 440 (e.g., the processor 120 of FIG. 1), causing the electronic device 400 to perform various operations. For example, the processor 440 may control operations for detecting the frequency of the light source using a plurality of different sampling rates.

In an embodiment, if the camera application is executed, the processor 440 may display a preview image obtained using the camera 410 on the display 430. The preview image may be acquired on a frame basis.

In an embodiment, while displaying the preview image obtained from the camera 410, the processor 440 may obtain brightness data for the light source using the sensor 420, and acquire a first data frame by sampling the brightness data based on a first sampling rate. Upon acquiring the first data frame from the sensor 420, the processor 440 may identify a first frequency corresponding to the first data frame. The processor 440 may compensate for the flickering based on the first frequency until a data frame subsequent to the first data frame is received while the preview image is provided. According to various embodiments, the sensor 420 may operate asynchronously or synchronously with the camera 410. For example, the sensor 420 may acquire data frames for measuring the frequency of the light source at a time interval (e.g., perform an operation for the light source frequency measurement at intervals of 1/2 second to 1 second) different from a time interval (e.g., 1/30 second or 1/60 second) of the camera 410 acquiring frames of the preview image. As another example, the sensor 420 may acquire the data frame at a time interval of acquiring the frames of the preview image from the camera 410.

According to various embodiments, the processor 440 may pre-measure the first frequency before the camera application is executed. While the camera application is not executed, the processor 440 may acquire the first data frame acquired by sampling the brightness data for the light source at the first sampling rate from the sensor 420, and identify the first frequency corresponding to the first data frame. Next, if the camera application is executed, the processor 440 may provide the preview image by setting the exposure value (or the shutter speed) of the camera 410 based on the first frequency.

In an embodiment, while displaying the preview image, the processor 440 may acquire the brightness data for the light source using the sensor 420, and acquire a second data frame by sampling the brightness data based on a second sampling rate which is different from the first sampling rate. Herein, the second data frame may be a data frame subsequent to the first data frame, and the second sampling rate may be determined in consideration of a permissible error range of the sensor 420. The processor 440 may identify the permissible error range of the sensor 420, and determine the second sampling rate within the identified permissible error range based on the first sampling rate. If obtaining the second data frame from the sensor 420, the processor 440 may identify the second frequency corresponding to the second data frame.

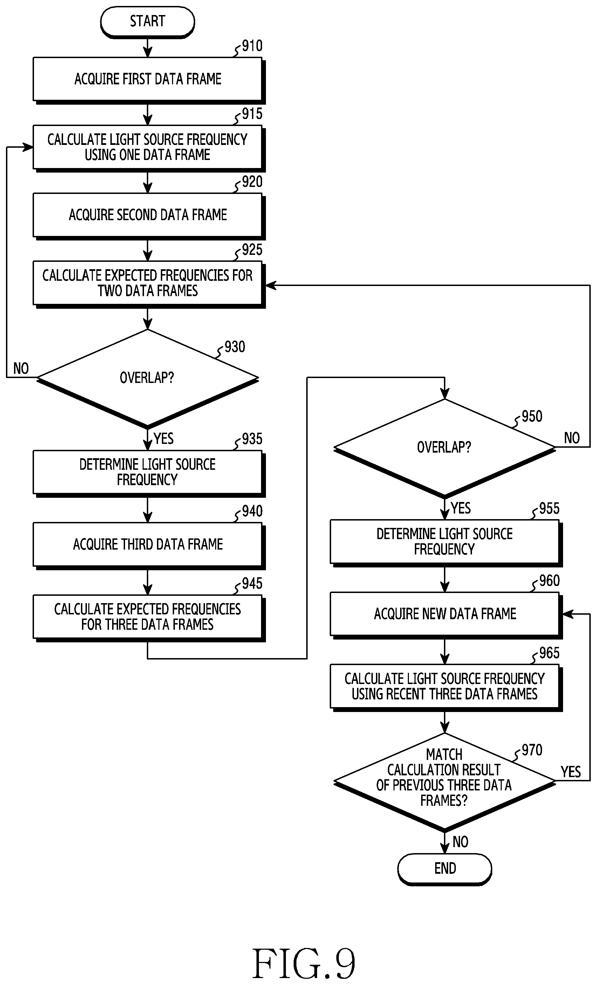

In an embodiment, the processor 440 may determine the frequency of the light source based on the first frequency and the second frequency. According to various embodiments, the processor 440 may compare expected frequencies obtained based on the first frequency with expected frequencies obtained based on the second frequency, and determine, based on the comparison result, how many sampling rates are to be used to determine the frequency of the light source based on the expected frequencies. For example, the processor 440 may acquire a plurality of first expected frequencies using the first frequency through a designated calculation, and acquire a plurality of second expected frequencies using the second frequency through the designated calculation. The designated calculation may be a calculation for detecting an alias frequency component generated by the frequency folding in frequency components greater than the Nyquist frequency *f_{N}* in the data sampling. The processor 440 may acquire a frequency value obtained using each sampling rate as the expected frequency with respect to a period smaller than the Nyquist frequency at each sampling rate, and acquire the expected frequency by adding or subtracting the measured frequency value based on a point (e.g., 2*f_{N}*, 4*f_{N}*, ...) where an out-of-phase signal is converted into an in-phase signal by the frequency folding with respect to a period greater than the Nyquist frequency. The processor 440 may compare the plurality of first expected frequencies and the plurality of second expected frequencies obtained as above, and thus identify whether there is an overlapping frequency value. If identifying no overlapping frequency value, the processor 440 may determine one of the first frequency measured based on the first sampling rate or the second frequency measured based on the second sampling rate as the frequency of the light source (e.g., corresponding to operation 930-No, operation 915 of FIG. 9). If identifying an overlapping frequency value, the processor 440 may determine the overlapping frequency value as the frequency of the light source (e.g., corresponding to operation 930-Yes, operation 935 of FIG. 9). At this time, the processor 440 may determine to use two or three sampling rates depending on the number of overlapping frequency values among the plurality of first expected frequencies and the plurality of second expected frequencies. For example, if the number of overlapping frequency values is one, the processor 440 may determine that the frequency detection of the light source is available using the first sampling rate and the second sampling rate, and determine the overlapping frequency value as the frequency of the light source. If the number of overlapping frequency values is two or more, the processor 440 may determine that additional measurement using a third sampling rate different from the first and second sampling rates is necessary to determine the frequency of the light source.

In an embodiment, while displaying the preview image, the processor 440 may acquire the brightness data for the light source using the sensor 420, sample the brightness data based on the third sampling rate different from the first sampling rate and the second sampling rate, and thus obtain a third data frame. Herein, the third data frame may be a data frame subsequent to the second data frame. The processor 440 may identify the permissible error range of the sensor 420, and determine the third sampling rate within the permissible error range based on the first sampling rate and/or the second sampling rate. Upon obtaining the third data frame from the sensor 420, the processor 440 may identify a third frequency corresponding to the third data frame. According to various embodiments, if the number of expected frequency values overlapping among the expected frequencies acquired based on the first sampling rate and the expected frequencies acquired based on the second sampling rate is two or more, the processor 440 may determine the frequency of the light source by additionally considering expected frequencies acquired based on the third sampling rate. The processor 440 may obtain a plurality of third expected frequencies using the third frequency through the designated calculation, and determine a frequency value overlapping with the plurality of third expected frequencies among the two or more expected frequency values as the frequency of the light source. If failing to obtain one overlapping frequency value from the plurality of first expected frequencies, the plurality of second expected frequencies and the plurality of third expected frequencies, the processor 440 may perform additional measurement using a sampling rate different from the previous ones until one overlapping frequency value is obtained.

According to various embodiments, if the number of expected frequency values overlapping among the expected frequencies acquired based on the first sampling rate and the expected frequencies acquired based on the second sampling rate is one, the processor 440 may identify whether there exists the overlapping expected frequency value among the expected frequencies acquired based on the third sampling rate, and thus verify the frequency detection result of the light source determined using the first sampling rate and the second sampling rate. For example, if identifying the overlapping expected frequency value among the expected frequencies acquired based on the third sampling rate, the processor 440 may determine to maintain the frequency of the light source determined using the first sampling rate and the second sampling rate. According to various embodiments, if identifying no overlapping expected frequency value among the expected frequencies acquired based on the third sampling rate, or if identifying that a difference between the third frequency measured based on the third sampling rate and the frequency detection result of the light source determined using the first sampling rate and the second sampling rate exceeds a designated range, the processor 440 may determine that the lighting environment is changed and determine to update the frequency of the light source. The processor 440 may reset the frequency detection result of the light source determined using the first sampling rate and the second sampling rate, and update the frequency of the light source based on the third frequency measured using the third sampling rate.

In an embodiment, if determining the number N of sampling rates required to measure the frequency of the light source, the processor 440 may apply the determined N-ary sampling rates in a sliding window manner. For example, if determining that the frequency of the light source may be measured using three different sampling rates, the processor 440 may set a window of a designated size based on the three different sampling rates, acquire a plurality of expected frequencies through the frequency measurement and the designated calculation for each sampling rate by moving and sequentially applying the window within the three different sampling rates every time a new data frame is acquired, and determine the overlapping frequency value in the plurality of expected frequencies obtained for each sampling rate as the frequency of the light source.

In an embodiment, while the camera application is executed to provide the preview image on the display 430, the processor 440 may store in the memory 450 the light source frequency value determined and/or updated based on the plurality of different sampling rates. If identify that a user input (e.g., a capture command or a shutter button input) for the image capturing is inputted while providing the preview image, the processor 440 may load the frequency value of the light source from the memory 450, set the exposure value (or the shutter speed) of the camera 410 based on the loaded frequency value of the light source, and thus acquire a photographing result with the flickering corrected.

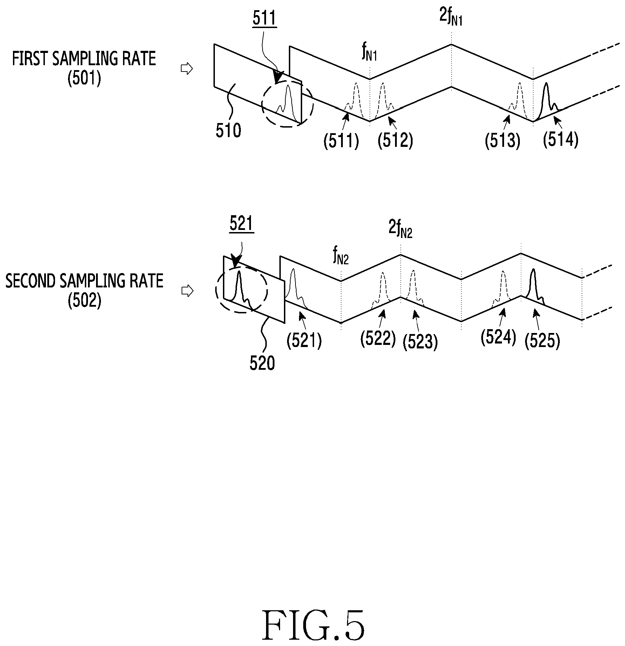

FIG. 5 is a diagram illustrating how to determine a frequency of a light source using a plurality of sampling rates, according to an embodiment. In an embodiment, the electronic device 400 may obtain a preview image on an image frame basis from the camera (e.g., the camera module 180 of FIG. 1 or the camera 410 of FIG. 4) while the camera application is executed. The electronic device 400 may acquire a data frame by sampling brightness data at a different sampling rate according to a designated time interval (e.g., 1/2 second to 1 second intervals) while providing the preview image, and measure the frequency of the light source based on the acquired data frame.

Referring to FIG. 5, the electronic device 400 may acquire a first data frame 510 by sampling the brightness data detected from the sensor (e.g., the sensor module 176 of FIG. 1 or the sensor 420 of FIG. 4) at a first sampling rate 501, and identify a first frequency 511 based on the first data frame 510. The electronic device 400 may determine the identified first frequency 511 as the frequency of the light source until acquiring a new data frame, and compensate for the flickering based on the first frequency 511 while providing the preview image.

In an embodiment, the electronic device 400 may acquire a second data frame 520 following the first data frame 510 by sampling the brightness data detected from the sensor 420 at a second sampling rate 502 which is different from the first sampling rate 501, and identify a second frequency 521 based on the second data frame 520.

In an embodiment, the electronic device 400 may estimate the frequency of the light source based on the first frequency 511 and the second frequency 521. If an actual frequency of the light source is greater than the Nyquist frequency of the first sampling rate 501 and/or the second sampling rate 502, the first frequency 511 and/or the second frequency 521 identified by the electronic device 400 may be distorted values due to the frequency folding. Hence, to more accurately detect the frequency of the light source, the electronic device 400 may compare expected frequencies obtained based on the first frequency 511 with expected frequencies obtained based on the second frequency 521, and thus determine an overlapping expected frequency as the frequency of the light source.

In an embodiment, the electronic device 400 may acquire a plurality of first expected frequencies 511, 512, 513, and 514 through a designated calculation using the first frequency 511. Herein, the designated calculation may be a calculation for detecting the first frequency 511, and an alias frequency component generated by the frequency folding in frequency components greater than the Nyquist frequency *f*_{*N*1} if the sampling is performed at the first sampling rate 501. For example, the electronic device 400 may obtain the first frequency 511 measured in a period smaller than the Nyquist frequency *f*_{*N*1}, and the components 512, 513, and 514 aliased by the frequency folding in a period greater than the Nyquist frequency *f*_{*N*1} as the plurality of first expected frequencies.

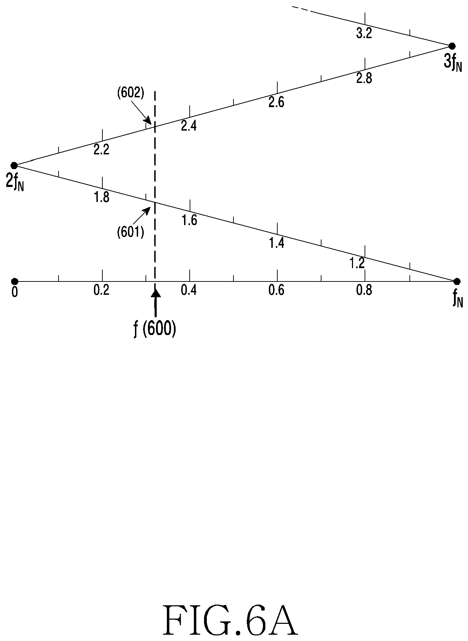

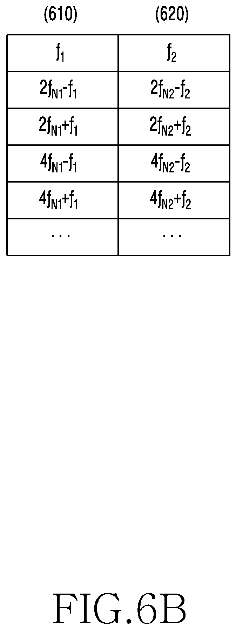

In an embodiment, the electronic device 400 may acquire a plurality of second expected frequencies 521, 522, 523, 524, and 525 through the designated calculation using the second frequency 521. The electronic device 400 may compute a plurality of second expected frequencies for the second sampling rate 502 in the same manner as for the first sampling rate 501. The electronic device 400 may acquire as the plurality of second expected frequencies, the second frequency 521 measured in the period smaller than the Nyquist frequency *f*_{*N*2}, and the components 522, 523, 524, and 525 aliased by the frequency folding in the period greater than the Nyquist frequency *f*_{*N*2}. The electronic device 400 may identify overlapping of the frequency 514 of the plurality of first expected frequencies 511, 512, 513, and 514 and the frequency 525 of the plurality of second expected frequencies 521, 522, 523, 524, and 525, and determine the identified overlapping frequency as the frequency of the light source. Specific details on the calculation of the plurality of first/second expected frequencies shall be described with reference to FIG. 6A and FIG. 6B.

FIG. 6A and FIG. 6B are diagrams describing how to calculate expected frequencies for a light source, according to an embodiment. Referring to FIG. 6A, the electronic device 400 may identify a frequency f 600 measured by sampling brightness data at a designated sampling rate, and alias frequencies 601 and 602 generated by the frequency folding in a period greater than the Nyquist frequency *f_{N}* which is the maximum effective frequency measurable at the designated sampling rate, as a plurality of expected frequencies for the designated sampling rate. For example, in the period greater than the Nyquist frequency *f_{N}*, the electronic device 400 may identify as the alias frequencies, the frequency value 601 acquired by subtracting the measured frequency value f 600 and the frequency value 602 acquired by adding the measured frequency value f 600 based on a point (e.g., 2*f_{N}*, 4*f_{N}*, ...) where an out-of-phase signal is converted into an in-phase signal by the frequency folding.

In an embodiment, the electronic device 400 may obtain a plurality of expected frequencies for two sampling rates according to this principle as shown in FIG. 6B. The electronic device 400 may obtain frequencies {*f*₁, 2*f*_{*N*1} - *f*₁, 2*f*_{*N*1} + *f*₁, 4*f*_{*N*1} - *f*₁, 4*f*_{*N*1} + *f*₁, ...} computed for the first sampling rate 610 as a plurality of first expected frequencies. The electronic device 400 may acquire frequencies {*f*₂, 2*f*_{*N*1} - *f*₂, 2*f*_{*N*1} + *f*₂, 4*f*_{*N*2} - *f*₂, 4*f*_{*N*2} + *f*₂, ...} computed for the second sampling rate 620 as a plurality of second expected frequencies. For example, assuming the first sampling rate 610 is 1800 Hz and the second sampling rate 620 is 2000 Hz, the electronic device 400 may identify that the Nyquist frequency *f*_{*N*1} which is the maximum effective frequency detectable at the first sampling rate 610 is 900 Hz, and the Nyquist frequency *f*_{*N*2} which is the maximum effective frequency detectable at the second sampling rate 620 is 1000 Hz. In this case, if the first frequency *f*₁ measured at the first sampling rate 610 is 500 Hz and the second frequency *f*₂ measured at the second sampling rate 620 is 700 Hz, these values may be applied to calculation expressions of FIG. 6B to acquire the expected frequencies as shown in Table 1 below.

**[Table 1]**

| First expected frequency | Second expected frequency |
|---|---|
| 500 | 700 |
| 1300 | 1300 |
| 2300 | 2700 |
| 3100 | 3300 |
| 4100 | 4700 |
| ... | ... |

The electronic device 400 may determine as the frequency of the light source, the overlapping expected frequency of 1300 Hz among the plurality of first expected frequencies {500, 1300, 2300, 3100, 4100, ...} acquired for the first sampling rate 610 and the plurality of second expected frequencies {700, 1300, 2700, 3300, 4700, ...} acquired for the second sampling rate 620 in Table 1.

According to various embodiments, if the number of overlapping frequency values among the expected frequencies acquired for the first sampling rate 610 and the expected frequencies acquired for the second sampling rate 620 is two or more, the electronic device 400 may determine false detection and perform additional calculations in the same manner for a third sampling rate different from the first sampling rate 610 and the second sampling rate 620. The electronic device 400 may determine as the frequency of the light source, a frequency value overlapping with the expected frequencies acquired for the third sampling rate among the two or more overlapping frequency values. The electronic device 400 may perform additional measurement using a different sampling rate from the previous ones until acquiring one overlapping frequency value.

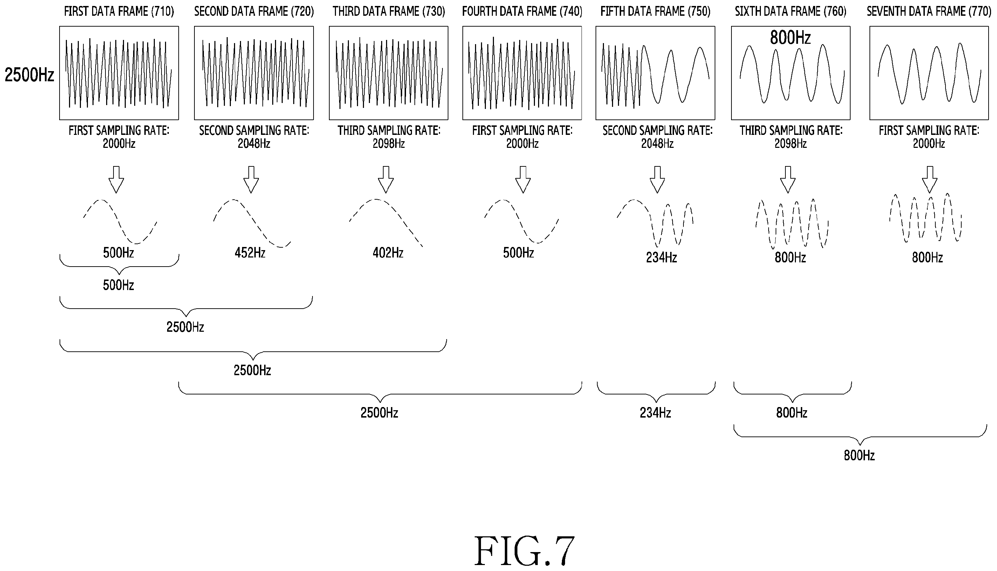

FIG. 7 is a diagram describing how to measure a frequency of a light source using a plurality of sampling rates while a camera application is executed on an electronic device 400, according to an embodiment. According to various embodiments, while a camera application is executed to provide a preview image acquired from a camera (e.g., the camera module 180 of FIG. 1 or the camera 410 of FIG. 4), the electronic device 400 may apply a plurality of different sampling rates in the sliding window manner.

Referring to FIG. 7, the electronic device 400 may receive a first data frame 710 acquired by sampling brightness data of the light source at a first sampling rate of 2000 Hz from a sensor (e.g., the sensor module 176 of FIG. 1 or the sensor 420 of FIG. 4), and detect a first frequency value of 500 Hz based on the first data frame 710. The electronic device 400 may determine the detected first frequency value 500 Hz as the frequency of the light source, and compensate for the flickering based on the determined frequency value 500 Hz of the light source until receiving a subsequent data frame while providing the preview image.

In an embodiment, while the camera application is executed to provide the preview image, the electronic device 400 may receive from the sensor 420 a second data frame 720 obtained by sampling the brightness data of the light source at a second sampling rate of 2048 Hz, and detect a second frequency value of 452 Hz based on the second data frame 720. Herein, the second data frame 720 may be a data frame temporally following the first data frame 710. The electronic device 400 may calculate the frequency of the light source based on the first frequency value detected in response to receiving the first data frame 710 and the second frequency value detected in response to receiving the second data frame 720. For example, the electronic device 400 may compare a plurality of first expected frequencies acquired by a designated calculation using the first frequency value 500 Hz with a plurality of second expected frequencies acquired by the designated calculation using the second frequency value 452 Hz, and thus identify an overlapping value. Herein, the designated calculation is to detect an alias frequency value generated by the frequency folding in frequency components greater than the Nyquist frequency *f_{N}*, and the electronic device 400 may acquire the plurality of first/second expected frequencies in the manner described in FIG. 6A and FIG. 6B. The electronic device 400 may identify the same value of 2500 Hz among the plurality of first expected frequencies and the plurality of second expected frequencies, and determine the identified frequency value 2500 Hz as the frequency of the light source. As the determined frequency value for the light source changes in response to receiving the second data frame 720, the electronic device 400 may compensate for the flickering based on the determined light source frequency value 2500 Hz until the light source frequency value further changes after receiving the second data frame 720.

In an embodiment, while the camera application is executed to provide the preview image, the electronic device 400 may receive from the sensor 420 a third data frame 730 acquired by sampling the brightness data of the light source at a third sampling rate of 2098 Hz, and detect a third frequency value of 402 Hz based on the third data frame 730. Herein, the third data frame 730 may be a data frame temporally following the second data frame 720. The electronic device 400 may verify the determined light source frequency value 2500 Hz based on the detected third frequency value in response to receiving the third data frame 730. For example, the electronic device 400 may maintain the determined frequency value 2500 Hz of the light source, if identifying that the overlapping frequency value 2500 Hz of the plurality of first/second expected frequencies is included in a plurality of third expected frequencies acquired by the designated calculation using the third frequency value 402 Hz.

According to various embodiments, the electronic device 400 may set a window based on the first sampling rate 2000 Hz, the second sampling rate 2048 Hz, and the third sampling rate 2098 Hz, that is, three different sampling rates, and sequentially apply the window by shifting it within the three different sampling rates every time the brightness data of the light source is detected by the sensor 420.

In an embodiment, while the camera application is executed to provide the preview image, the electronic device 400 may receive from the sensor 420 a fourth data frame 740 acquired by re-sampling the brightness data of the light source at the first sampling rate of 2000 Hz, and detect a fourth frequency value of 500 Hz based on the fourth data frame 740. Herein, the fourth data frame 740 may be a data frame temporally subsequent to the third data frame 730. The electronic device 400 may further verify the determined frequency value 2500 Hz of the light source based on the fourth frequency value detected in response to receiving the fourth data frame 740. For example, if identifying that a plurality of fourth expected frequencies acquired by the designated calculation using the fourth frequency value 500 Hz includes the overlapping frequency value 2500 Hz of the plurality of second/third expected frequencies and determining that the corresponding frequency value is identical to the determined frequency value 2500 Hz of the light source, the electronic device 400 may maintain the determined frequency value 2500 Hz of the light source.

In an embodiment, while the camera application is executed to provide the preview image, the electronic device 400 may receive from the sensor 420 a fifth data frame 750 acquired by re-sampling the brightness data of the light source at the second sampling rate of 2048 Hz, and detect a fifth frequency value of 234 Hz based on the fifth data frame 750. Herein, the fifth data frame 750 may be a data frame temporally subsequent to the fourth data frame 740. The electronic device 400 may determine that the lighting environment is changed based on the detected fifth frequency value in response to receiving the fifth data frame 750, and change the frequency value of the light source. For example, the electronic device 400 may determine the detected fifth frequency value 234 Hz as the changed frequency of the light source.

In an embodiment, while the camera application is executed to provide the preview image, the electronic device 400 may receive from the sensor 420 a sixth data frame 760 by re-sampling the brightness data of the light source at the third sampling rate of 2088 Hz, and detect a sixth frequency value of 800 Hz based on the sixth data frame 760. Herein, the sixth data frame 760 may be a data frame temporally subsequent to the fifth data frame 750. The electronic device 400 may determine that the lighting environment is further changed based on the detected sixth frequency value in response to receiving the sixth data frame 760, and update the detected sixth frequency value 800 Hz as the changed frequency of the light source.

In an embodiment, while the camera application is executed to provide the preview image, the electronic device 400 may receive from the sensor 420 a seventh data frame 770 acquired by re-sampling the brightness data of the light source at the first sampling rate of 2000 Hz, and detect a seventh frequency value of 800 Hz based on the seventh data frame 770. Herein, the seventh data frame 770 may be a data frame temporally subsequent to the sixth data frame 760. The electronic device 400 may identify that the detected seventh frequency value in response to receiving the seventh data frame 770 is identical to the light source frequency 800 Hz updated upon receiving the sixth data frame 760, and maintain the light source frequency 800 Hz. According to various embodiments, the electronic device 400 may determine and update the frequency of the light source by sequentially apply the three different sampling rates to subsequent data frames received thereafter, in the same manner.

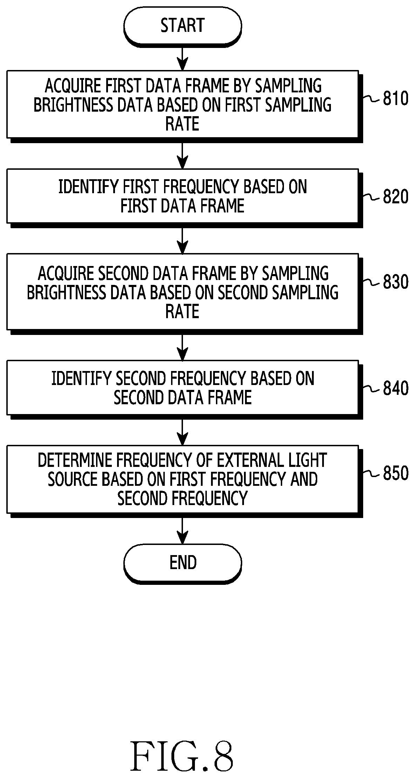

FIG. 8 is a flowchart illustrating an operation method of the electronic device 400, according to an embodiment. According to an embodiment, the electronic device 400 is a device for detecting the frequency of a light source having a frequency equal to or greater than the Nyquist frequency using a plurality of different sampling rates in image capturing, and may correspond to the electronic device 101 shown in FIG. 1. Operations of FIG. 8 may be performed by a processor (e.g., the processor 120 of FIG. 1 or the processor 440 of FIG. 4) included in the electronic device 400.

Referring to FIG. 8, in operation 810, the electronic device 400 may acquire brightness data for the light source using a sensor (e.g., the sensor module 176 of FIG. 1 or the sensor 420 of FIG. 4), and acquire a first data frame by sampling the brightness data based on a first sampling rate. According to various embodiments, the sensor 420 may operate asynchronously or synchronously with the camera 410. For example, the sensor 420 may acquire data frames for measuring the frequency of the light source at a time interval (e.g., perform operations to measure the light source frequency at intervals of 1/2 second to 1 second) different from a time interval (e.g., 1/30 second or 1/60 second) at which the camera 410 acquires frames of the preview image. As another example, the sensor 420 may acquire the data frame at a time interval of obtaining the frame of the preview image from the camera 410.

According to an embodiment, in operation 820, the electronic device 400 may identify a first frequency based on the first data frame. The electronic device 400 may compensate for the flickering by setting the exposure value (or the shutter speed) of the camera (e.g., the camera module 180 of FIG. 1 or the camera 410 of FIG. 4) based on the first frequency to until acquiring a data frame subsequent to the first data frame.

According to various embodiments, operation 810 and operation 820 may be performed before the camera application is executed, or may be performed within a designated time after the camera application is executed.

According to an embodiment, in operation 830, while the camera application is executed to provide the preview image, the electronic device 400 may acquire brightness data for the light source using the sensor 420 and acquire a second data frame by sampling the brightness data based on a second sampling rate different from the first sampling rate. The second data frame may be a data frame subsequent to the first data frame. In operation 830, the electronic device 400 may identify the permissible error range of the sensor 420 and determine the second sampling rate within the determined permissible error range based on the first sampling rate.

According to an embodiment, the electronic device 400 may identify a second frequency based on the second data frame in operation 840.

According to an embodiment, in operation 850, the electronic device 400 may determine the frequency of the light source based on the first frequency and the second frequency. In operation 850, the electronic device 400 may compare expected frequencies obtained based on the first frequency with expected frequencies obtained based on the second frequency, and determine, based on the comparison result, how many sampling rates are to be used to determine the frequency of the light source based on the expected frequencies. For example, the electronic device 400 may acquire a plurality of first expected frequencies using the first frequency through a designated calculation, and acquire a plurality of second expected frequencies using the second frequency through the designated calculation. The designated calculation may be a calculation for detecting an alias frequency component generated by the frequency folding in frequency components greater than the Nyquist frequency *f_{N}* in the data sampling. The electronic device 400 may acquire a frequency value obtained using each sampling rate as the expected frequency with respect to a period smaller than the Nyquist frequency at each sampling rate, and acquire the expected frequency by adding or subtracting the measured frequency value based on a point (e.g., 2*f_{N}*, 4*f_{N}*, ...) where an out-of-phase signal is converted into an in-phase signal by the frequency folding with respect to a period greater than the Nyquist frequency. The electronic device 400 may identify whether there is an overlapping frequency value in the plurality of first expected frequencies and the plurality of second expected frequencies obtained as above, and, if identifying no overlapping frequency value, determine one of the first frequency measured based on the first sampling rate or the second frequency measured based on the second sampling rate as the frequency of the light source. If identifying an overlapping frequency value, the electronic device 400 may the overlapping frequency value as the frequency of the light source. At this time, the electronic device 400 may determine to use two or three sampling rates depending on the number of overlapping frequency values among the plurality of first expected frequencies and the plurality of second expected frequencies. If the number of overlapping frequency values is one, the electronic device 400 may determine that the frequency detection of the light source is available using the first sampling rate and the second sampling rate, and determine the overlapping frequency value as the frequency of the light source. If the number of overlapping frequency values is two or more, the electronic device 400 may determine that additional measurement using a third sampling rate different from the first sampling rate and the second sampling rate is necessary to determine the frequency of the light source.

According to an embodiment, after operation 850, while the camera application is executed to provide the preview image, the electronic device 400 may acquire brightness data for the light source using the sensor 420, and acquire a third data frame by sampling the brightness data based on a third sampling rate different from the first sampling rate and the second sampling rate. Herein, the third data frame may be a data frame subsequent to the second data frame. The electronic device 400 may identify the permissible error range of the sensor 420, and determine the third sampling rate within the determined permissible error range based on the first sampling rate and/or the second sampling rate. The electronic device 400 may identify a third frequency based on the third data frame. According to various embodiments, if the number of overlapping expected frequency values among the expected frequencies acquired based on the first sampling rate and the expected frequencies acquired based on the second sampling rate is two or more, the electronic device 400 may determine the frequency of the light source by additionally considering the expected frequencies acquired based on the third sampling rate. For example, the electronic device 400 may obtain a plurality of third expected frequencies using the third frequency through the designated calculation, and determine a frequency value overlapping with the plurality of third expected frequencies among the two or more expected frequency values as the frequency of the light source. If failing to acquire one overlapping frequency value among the plurality of first expected frequencies, the plurality of second expected frequencies, and the plurality of third expected frequencies, the electronic device 400 may perform additional measurement using a sampling rate different from the previous ones until one overlapping frequency value is acquired.

According to various embodiments, if the number of overlapping expected frequency values among the expected frequencies acquired based on the first sampling rate and the expected frequencies acquired based on the second sampling rate is one, the electronic device 400 may verify the frequency detection result of the light source determined using the first sampling rate and the second sampling rate, by identifying whether there exists the overlapping expected frequency value among the expected frequencies acquired based on the third sampling rate. For example, if identifying the overlapping expected frequency value among the expected frequencies acquired based on the third sampling rate, the electronic device 400 may determine to maintain the frequency of the light source determined using the first sampling rate and the second sampling rate. According to various embodiments, if identifying no overlapping expected frequency value among the expected frequencies acquired based on the third sampling rate, or if identifying that the difference between the third frequency measured based on the third sampling rate and the frequency detection result of the light source determined using the first sampling rate and the second sampling rate exceeds a designated range, the electronic device 400 may determine that the lighting environment is changed and determine to update the frequency of the light source. The electronic device 400 may reset the frequency detection result of the light source determined using the first sampling rate and the second sampling rate, and update the frequency of the light source based on the third frequency measured using the third sampling rate.

According to an embodiment, the electronic device 400 may store the light source frequency value determined and/or updated based on the plurality of different sampling rates, in a memory (e.g., the memory 130 of FIG. 1 or the memory 450 of FIG. 4) while the camera application is executed to provide the preview image on the display 430. Uon identifying that a user input (e.g., a capture command or a shutter button input) for image capturing is inputted while providing the preview image, the electronic device 400 may load the frequency value of the light source from the memory 450, set the exposure value (or the shutter speed) of the camera 410 based on the loaded frequency value of the light source, and thus acquire a photographing result with the flickering corrected.

FIG. 9 is a flowchart illustrating a method for determining a frequency of a light source using a plurality of sampling rates while a camera application is executed on an electronic device 400, according to an embodiment. Operations in FIG. 9 may be understood as functions performed by a processor (e.g., the processor 120 of FIG. 1 or the processor 440 of FIG. 4) included in the electronic device 400.

Referring to FIG. 9, in operation 910, the electronic device 400 may acquire a first data frame from a sensor (e.g., the sensor module 176 of FIG. 1 or the sensor 420 of FIG. 4). For example, the electronic device 400 may acquire the first data frame by sampling brightness data of the light source detected by the sensor 420 at a first sampling rate.

According to an embodiment, if acquiring the first data frame, the electronic device 400 may calculate the light source frequency using one data frame in operation 915. For example, the electronic device 400 may measure a first frequency based on the first data frame. The electronic device 400 may determine the measured first frequency as the light source frequency until acquiring a subsequent data frame.

According to various embodiments, operation 910 and operation 915 may be performed before the camera application is executed, or may be performed within a designated time after the camera application is executed.

According to an embodiment, in operation 920, the electronic device 400 may acquire from the sensor 420 a second data frame subsequent to the first data frame. The electronic device 400 may acquire the second data frame by sampling the brightness data of the light source detected by the sensor 420 at a second sampling rate while the camera application is executed.

According to an embodiment, upon acquiring the second data frame, the electronic device 400 may calculate the light source frequency using the first data frame and the second data frame previously received, that is, using two data frames in operation 925. For example, the electronic device 400 may measure a second frequency based on the second data frame, and calculate the light source frequency based on the first frequency previously measured for the first data frame and the second frequency. The electronic device 400 may compare a plurality of first expected frequencies obtained by a designated calculation using the first frequency with a plurality of second expected frequencies obtained by the designated calculation using the second frequency. The designated calculation may be a calculation for detecting an alias frequency component generated by the frequency folding in frequency components greater than the Nyquist frequency *f_{N}* in the data sampling at each sampling rate.

According to an embodiment, in operation 930, the electronic device 400 may determine whether there is any overlapping expected frequency among the plurality of first expected frequencies and the plurality of second expected frequencies. For example, the electronic device 400 may determine the overlapping expected frequency by identifying whether an identical expected frequency value is included in the plurality of first expected frequencies and the plurality of second expected frequencies.

If determining no overlapping expected frequency in the plurality of first expected frequencies and the plurality of second expected frequencies (operation 930-No), the electronic device 400 may return to operation 915 and determine the frequency measured corresponding to either the first data frame or the second data frame, that is, one data frame, as the light source frequency until acquiring a subsequent data frame.

If determining that there is an overlapping expected frequency in the plurality of first expected frequencies and the plurality of second expected frequencies (operation 930-Yes), the electronic device 400 may determine the overlapping expected frequency as the light source frequency in operation 935. According to various embodiments, if there are two or more overlapping expected frequencies, the electronic device 400 may determine one frequency value of the two or more overlapping expected frequencies as the light source frequency, and re-determine the light source frequency by considering a calculation result for a third sampling rate which differs from the first sampling rate and the second sampling rate applied to the first data frame and the second data frame respectively.

According to an embodiment, in operation 940, the electronic device 400 may acquire from the sensor 420 a third frame data following the second data frame. The electronic device 400 may acquire the third data frame by sampling the brightness data of the light source detected by the sensor 420 at the third sampling rate while the camera application is executed.

According to an embodiment, upon acquiring the third data frame, the electronic device 400 may calculate the light source frequency in operation 945 using the previously received first/second data frames and the third data frame, that is, using three data frames. For example, the electronic device 400 may measure a third frequency based on the third data frame, and calculate the light source frequency based on the first/second frequencies previously measured for the first/second data frames and the third frequency. The electronic device 400 may compare a plurality of first expected frequencies obtained by a designated calculation using the first frequency, a plurality of second expected frequencies obtained by the designated calculation using the second frequency, and a plurality of third expected frequencies obtained by the designated calculation using the third frequency. The designated calculation may be a calculation for detecting an alias frequency component generated by the frequency folding in frequency components greater than the Nyquist frequency *f_{N}* in the data sampling at each sampling rate.

According to an embodiment, in operation 950, the electronic device 400 may determine whether there is any overlapping expected frequency among the plurality of first expected frequencies, the plurality of second expected frequencies and the plurality of third expected frequencies. For example, the electronic device 400 may determine the overlapping expected frequency, by identifying whether an identical expected frequency value is included in the plurality of first expected frequencies, the plurality of second expected frequencies and the plurality of third expected frequencies.

If determining no overlapping expected frequency among the plurality of first expected frequencies, the plurality of second expected frequencies and the plurality of third expected frequencies (operation 950-No), the electronic device 400 may return to operation 925 and determine the light source frequency based on the measured frequencies corresponding to the second data frame and the third data frame, i.e., the two data frames, until acquiring a subsequent data frame.

If determining an overlapping expected frequency among the plurality of first expected frequencies, the plurality of second expected frequencies and the plurality of third expected frequencies (operation 950-Yes), the electronic device 400 may determine the overlapping expected frequency as the light source frequency in operation 955. According to various embodiments, if there are two or more overlapping expected frequencies, the electronic device 400 may perform additional measurement using a sampling rate different from the previous ones until acquiring one overlapping frequency value.

According to an embodiment, the electronic device 400 may acquire from the sensor 420 a new data frame subsequent to the third data frame in operation 960. According to various embodiments, the electronic device 400 may acquire the new data frame by applying the previously used three sampling rates in the sliding window manner. For example, the electronic device 400 may acquire the new data frame by setting a window of a designated size for the first sampling rate, the second sampling rate, and the third sampling rate, and sequentially applying the window while moving it within the three sampling rates. For example, the electronic device 400 may acquire a fourth data frame following the third data frame by re-sampling the brightness data of the light source detected by the sensor 420 at the first sampling rate while the camera application is executed.

According to an embodiment, in operation 965, if receiving the new data frame, the electronic device 400 may calculate the light source frequency using three data frames most recently received, including the new data frame. For example, if acquiring the fourth data frame following the third data frame, the electronic device 400 may calculate the light source frequency using three data frames including two data frames (e.g., the second/third data frames) received prior to the fourth data frame and the fourth data frame. The electronic device 400 may calculate a plurality of expected frequencies for each of the three data frames, and identify an overlapping frequency value among the plurality of expected frequencies calculated for each data frame. If there is no overlapping frequency value among the plurality of expected frequencies calculated for each data frame, the electronic device 400 may identify the frequency value measured based on the new data frame (e.g., the fourth data frame).

According to an embodiment, in operation 970, the electronic device 400 may determine whether the expected frequency calculated using the most recent three data frames (e.g., the frequency value identified in operation 965) matches the light source frequency calculated using the previous three data frames (e.g., the light source frequency determined in operation 955).

If determining the match of the expected frequency calculated using the most recent three data frames and the light source frequency calculated using the previous three data frames (operation 970-Yes), the electronic device 400 may maintain the determination on the light source frequency and repeat operation 960 through operation 970 upon receiving each subsequent data frame.

If determining no match of the expected frequency calculated using the most recent three data frames and the light source frequency calculated using the previous three data frames (operation 970-No), the electronic device 400 may reset the determination on the light source frequency and return to operation 915 to determine the frequency measured for the new data frame (e.g., the fourth frame) as the light source frequency until acquiring a new subsequent data frame. According to various embodiments, the electronic device 400 may repeatedly perform the process of FIG. 9 while the camera application is executed, and the corresponding process may be terminated if the execution of the camera application ends.

In an embodiment, an electronic device (e.g., the electronic device 400) may include a camera 410, a sensor 420, a processor 440, and a memory 450 for storing instructions, and the processor 440 may be configured to, when the instructions are executed, cause the electronic device 400 to, if a camera application is executed, acquire a first data frame by sampling brightness data acquired by the sensor 420 based on a first sampling rate, identify a first frequency based on the first data frame, acquire a second data frame subsequent to the first data frame by sampling the brightness data acquired by the sensor 420 based on a second sampling rate different from the first sampling rate while the camera application is executed, identify a second frequency based on the second data frame, and determine a frequency of the light source based on the first frequency and the second frequency.

In an embodiment, the processor 440 may be configured to, when the instructions are executed, cause the electronic device 400 to compare expected frequencies obtained based on the first frequency and expected frequencies obtained based on the second frequency, and determine the number of sampling rates required to measure the frequency of the light source based on the comparison result.

In an embodiment, the processor 440 may be configured to, when the instructions are executed, cause the electronic device 400 to compare a plurality of first expected frequencies obtained by a designated calculation using the first frequency and a plurality of second expected frequencies obtained by the calculation using the second frequency, identify whether there exists an overlapping expected frequency among the plurality of first expected frequencies and the plurality of second expected frequencies, and, if identifying that the overlapping expected frequency exists, set the expected frequency as the frequency of the light source.

In an embodiment, the processor 440 may be configured to, when the instructions are executed, cause the electronic device 400 to, if identifying two or more overlapping expected frequencies, acquire a third data frame following the first data frame and the second data frame by sampling the brightness data based on a third sampling rate different from the first sampling rate and the second sampling rate, identify a third frequency based on the third data frame, identify a plurality of third expected frequencies obtained by the designated calculation using the third frequency, and determine the expected frequency overlapping with the plurality of third expected frequencies, among the two or more expected frequencies, as the frequency of the light source.

In an embodiment, the processor 440 may be configured to, when the instructions are executed, cause the electronic device 400 to, if identifying no overlapping expected frequency, determine the first frequency or the second frequency as the frequency of the light source.

In an embodiment, the processor 440 may be configured to, when the instructions are executed, cause the electronic device 400 to identify a permissible error range of the sensor, and determine the second sampling rate within the identified permissible error range based on the first sampling rate.

In an embodiment, the processor 440 may be configured to, when the instructions are executed, cause the electronic device 400 to acquire a third data frame subsequent to the first data frame and the second data frame by sampling the brightness data at a third sampling rate different from the first and second sampling rates, determine a third frequency based on the third data frame, determine whether the expected frequency obtained based on the third frequency corresponds to the determined frequency of the light source, and, if the expected frequency obtained based on the third frequency corresponds to the determined frequency of the light source, maintain the determination on the light source frequency.

In an embodiment, the processor 440 may be configured to, when the instructions are executed, cause the electronic device 400 to, if identifying that a difference between the third frequency and the determined frequency of the light source exceeds a designated range, update the frequency of the light source based on the third frequency.

In an embodiment, the processor 440 may be configured to, when the instructions are executed, cause the electronic device 400 to store the determined frequency of the light source in the memory 450.

In an embodiment, the electronic device 400 may further include a display 430, and the processor 440 may be configured to, when the instructions are executed, cause the electronic device 400 to, if identifying a capture command while providing a preview image on the display 430, set an exposure value of the camera based on the frequency of the light source stored in the memory.

A method according to an embodiment may include, if a camera application is executed, acquiring a first data frame by sampling brightness data obtained from a sensor based on a first sampling rate, identifying a first frequency based on the first data frame, acquiring a second data frame subsequent to the first data frame by sampling the brightness data acquired by the sensor based on a second sampling rate different from the first sampling rate while the camera application is executed, identifying a second frequency based on the second data frame, and determining a frequency of the light source based on the first frequency and the second frequency.

In an embodiment, determining the frequency of the light source may include comparing expected frequencies obtained based on the first frequency and expected frequencies obtained based on the second frequency, and determining the number of sampling rates required to measure the frequency of the light source based on the comparison result.

In an embodiment, determining the frequency of the light source may include comparing a plurality of first expected frequencies obtained by a designated calculation using the first frequency and a plurality of second expected frequencies obtained by the designated calculation using the second frequency, identifying whether there exists an overlapping expected frequency among the plurality of first expected frequencies and the plurality of second expected frequencies, and, if identifying that the overlapping expected frequency exists, determining the expected frequency as the frequency of the light source.

In an embodiment, the method may further include, if identifying two or more overlapping expected frequencies, acquiring a third data frame following the first data frame and the second data frame by sampling the brightness data based on a third sampling rate different from the first sampling rate and the second sampling rate, identifying a third frequency based on the third data frame, identifying a plurality of third expected frequencies obtained by the designated calculation using the third frequency, and determining the expected frequency overlapping with the plurality of third expected frequencies, among the two or more expected frequencies, as the frequency of the light source.

In an embodiment, the method may further include, if identifying no overlapping expected frequency, determining the first frequency or the second frequency as the frequency of the light source.

In an embodiment, the method may further include identifying a permissible error range of a sensor which acquires the brightness data, and determining the second sampling rate within the identified permissible error range.

In an embodiment, the method may further include acquiring a third data frame subsequent to the first data frame and the second data frame by sampling the brightness data based on a third sampling rate different from the first sampling rate and the second sampling rate, identifying a third frequency based on the third data frame, determining whether the expected frequency obtained based on the third frequency corresponds to the determined frequency of the light source, and, if the expected frequency obtained based on the third frequency corresponds to the determined frequency of the light source, maintaining the determination on the light source frequency.

In an embodiment, the method may further include, if identifying that a difference between the third frequency and the determined frequency of the light source exceeds a designated range, updating the frequency of the light source based on the third frequency.

In an embodiment, the method may further include storing the determined frequency of the light source in a memory 450.

In an embodiment, the method may further include, if identifying a capture command while the camera application is executed to provide a preview image, setting an exposure value of the camera based on the frequency of the light source stored in the memory 450.

In an embodiment, in a computer-readable recording medium containing programs executable on a computer, the programs may be caused by the computer to perform, if a camera application is executed, acquiring a first data frame by sampling brightness data acquired by a sensor based on a first sampling rate, identifying a first frequency based on the first data frame, acquiring a second data frame subsequent to the first data frame by sampling the brightness data acquired by the sensor based on a second sampling rate different from the first sampling rate while the camera application is executed, identifying a second frequency based on the second data frame, and determining a frequency of the light source based on the first frequency and the second frequency.

Effects obtainable from the disclosure are not limited to the above-mentioned effects, and other effects which are not mentioned may be clearly understood by those skilled in the art of the disclosure through the following descriptions.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device 400 comprising:
a camera 410;
a sensor 420 for detecting brightness for a light source;
a processor 440; and
a memory 450 for storing instructions,
wherein the instructions, when executed by the processor 440, cause the electronic device 400 to,
if a camera application is executed, acquire a first data frame by sampling brightness data acquired by the sensor 420 based on a first sampling rate,
identify a first frequency based on the first data frame,
acquire a second data frame subsequent to the first data frame by sampling the brightness data acquired by the sensor 420 based on a second sampling rate different from the first sampling rate while the camera application is executed,
identify a second frequency based on the second data frame, and
determine a frequency of the light source based on the first frequency and the second frequency.

2. The electronic device of claim 1, wherein the instructions, when executed by the processor 440, cause the electronic device 400 to,
compare expected frequencies obtained based on the first frequency and expected frequencies obtained based on the second frequency, and
determine the number of sampling rates required to measure the frequency of the light source based on the comparison result.

3. The electronic device of claim 2, wherein the instructions, when executed by the processor 440, cause the electronic device 400 to,
compare a plurality of first expected frequencies obtained by a designated calculation using the first frequency and a plurality of second expected frequencies obtained by the calculation using the second frequency,
identify whether there exists an overlapping expected frequency among the plurality of first expected frequencies and the plurality of second expected frequencies, and
if identifying that the overlapping expected frequency exists, set the expected frequency as the frequency of the light source.

4. The electronic device of claim 3, wherein the instructions, when executed by the processor 440, cause the electronic device 400 to,
if identifying two or more overlapping expected frequencies, acquire a third data frame following the first data frame and the second data frame by sampling the brightness data based on a third sampling rate different from the first sampling rate and the second sampling rate,
identify a third frequency based on the third data frame,
identify a plurality of third expected frequencies obtained by the designated calculation using the third frequency, and
determine the expected frequency overlapping with the plurality of third expected frequencies, among the two or more expected frequencies, as the frequency of the light source.

5. The electronic device of claim 3, wherein the instructions, when executed by the processor 440, cause the electronic device 400 to,
if identifying no overlapping expected frequency, determine the first frequency or the second frequency as the frequency of the light source.

6. The electronic device of claim 1, wherein the instructions, when executed by the processor 440, cause the electronic device 400 to,
identify a permissible error range of the sensor, and
determine the second sampling rate within the identified permissible error range based on the first sampling rate.

7. The electronic device of claim 1, wherein the instructions, when executed by the processor 440, cause the electronic device 400 to,
acquire a third data frame subsequent to the first data frame and the second data frame by sampling the brightness data at a third sampling rate different from the first and second sampling rates,
determine a third frequency based on the third data frame,
determine whether the expected frequency obtained based on the third frequency corresponds to the determined frequency of the light source,
if the expected frequency obtained based on the third frequency corresponds to the determined frequency of the light source, maintain the determination on the light source frequency, and
if identifying that a difference between the third frequency and the determined frequency of the light source exceeds a designated range, update the frequency of the light source based on the third frequency.

8. The electronic device of claim 1, wherein the instructions, when executed by the processor 440, cause the electronic device 400 to,
store the determined frequency of the light source in the memory 450.

9. The electronic device of claim 8, further comprising:
a display,
wherein the instructions, when executed by the processor 440, cause the electronic device 400 to,
if identifying a capture command while providing a preview image on the display, set an exposure value of the camera 410 based on the frequency of the light source stored in the memory 450.

10. A method comprising:
if a camera application is executed, acquiring a first data frame by sampling brightness data obtained from a sensor based on a first sampling rate;
identifying a first frequency based on the first data frame;
acquiring a second data frame subsequent to the first data frame by sampling the brightness data acquired by the sensor based on a second sampling rate different from the first sampling rate while the camera application is executed;
identifying a second frequency based on the second data frame; and
determining a frequency of the light source based on the first frequency and the second frequency.

11. The method of claim 10, wherein determining the frequency of the light source comprises,
comparing expected frequencies obtained based on the first frequency and expected frequencies obtained based on the second frequency; and
determining the number of sampling rates required to measure the frequency of the light source based on the comparison result.

12. The method of claim 11, wherein determining the frequency of the light source comprises,
comparing a plurality of first expected frequencies obtained by a designated calculation using the first frequency and a plurality of second expected frequencies obtained by the designated calculation using the second frequency;
identifying whether there exists an overlapping expected frequency among the plurality of first expected frequencies and the plurality of second expected frequencies;
if identifying that the overlapping expected frequency exists, determining the expected frequency as the frequency of the light source; and
if identifying no overlapping expected frequency, determining the first frequency or the second frequency as the frequency of the light source.

13. The method of claim 12, further comprising:
if identifying two or more overlapping expected frequencies, acquiring a third data frame following the first data frame and the second data frame by sampling the brightness data based on a third sampling rate different from the first sampling rate and the second sampling rate;
identifying a third frequency based on the third data frame;
identifying a plurality of third expected frequencies obtained by the designated calculation using the third frequency; and
determining the expected frequency overlapping with the plurality of third expected frequencies, among the two or more expected frequencies, as the frequency of the light source.

14. The method of claim 10, further comprising:
identifying a permissible error range of a sensor which acquires the brightness data; and
determining the second sampling rate within the identified permissible error range.

15. The method of claim 10, further comprising:
acquiring a third data frame subsequent to the first data frame and the second data frame by sampling the brightness data based on a third sampling rate different from the first sampling rate and the second sampling rate;
determining a third frequency based on the third data frame;
determining whether the expected frequency obtained based on the third frequency corresponds to the determined frequency of the light source;
if the expected frequency obtained based on the third frequency corresponds to the determined frequency of the light source, maintaining the determination on the light source frequency; and
if identifying that a difference between the third frequency and the determined frequency of the light source exceeds a designated range, updating the frequency of the light source based on the third frequency.
